# EUROPÄISCHE PATENTSCHRIFT

(11) **EP 3 306 507 B1**
(45) Veröffentlichungstag und Bekanntmachung des Hinweises auf die Patenterteilung: **03.06.2020**
(21) Anmeldenummer: 17190811.4
(22) Anmeldetag: 13.09.2017
(51) Int. Cl.: G06F 21/44, H04L 29/06, H04W 12/06

(54) **KOMPONENTE FÜR EINE SICHERHEITSKRITISCHE FUNKTIONSKETTE**
COMPONENT FOR A SAFETY-CRITICAL FUNCTION CHAIN
COMPOSANTS POUR UNE CHAÎNE FONCTIONNELLE CRITIQUE POUR LA SÉCURITÉ

(30) Priorität: 04.10.2016 DE 102016219204
(43) Veröffentlichungstag der Anmeldung: 11.04.2018
(73) Patentinhaber: MBDA Deutschland GmbH, 86529 Schrobenhausen (DE)
(72) Erfinder: WAGNER, Dieter, 85591 Vaterstetten (DE)
(74) Vertreter: Isarpatent

(56) Entgegenhaltungen:
- EP-A1- 2 814 277
- US-A1- 2007 143 629
- US-A1- 2016 135 045

## Beschreibung

Die Erfindung betrifft eine sicherheitskritische Funktionskette, die mehrere miteinander über Kommunikationsverbindungen verkettete Komponenten zur Bereitstellung einer Sicherheitsfunktion aufweist.

Systeme, die sicherheitskritische Funktionsketten umfassen, können eine Vielzahl von Komponenten aufweisen. Um sicherheitskritische Funktionsketten zu zertifizieren bzw. zu rezertifizieren, wird eine Zertifizierung durch eine Zertifizierungsstelle durchgeführt. Die Zertifizierung eines Produktes bzw. einer Komponente wird auf Veranlassung des Herstellers oder eines Vertreibers durchgeführt. Herkömmliche Zertifizierungsverfahren umfassen die technische Prüfung bzw. Evaluierung der Komponenten gemäß vorgegebener Kriterien. Die technische Prüfung kann von einer Prüfstelle durchgeführt werden, die von der Zertifizierungsstelle anerkannt ist. Dabei wird die Erfüllung von Anforderungen an das jeweilige Produkt bzw. die jeweilige Komponente, an die Entwicklungsumgebung, an die Anwenderdokumentation sowie an den Betrieb der jeweiligen Komponente geprüft. Die Dauer eines Zertifizierungsverfahrens ist abhängig von der Komplexität der jeweiligen Komponenten und einer Prüftiefe. Das Ergebnis des Zertifizierungsverfahrens wird in einem Zertifizierungsreport festgehalten. Dieser Zertifizierungsreport enthält u.a. ein Sicherheitszertifikatsdokument und einen detaillierten Zertifizierungsbericht. Bei sicherheitsrelevanten Änderungen einer Komponente oder an Entwicklungsprozessen der Komponente ist eine erneute Zertifizierung bzw. Rezertifizierung der Komponente erforderlich. Bei jeder Änderung innerhalb einer sicherheitskritischen Funktionskette, die mehrere miteinander verkettete Komponenten umfasst, verfällt die Betriebserlaubnis für die gesamte sicherheitskritische Funktionskette, die dann nur durch eine aufwendige Rezertifizierung wiedererlangt werden kann.

Die Druckschrift US 2007/0143629 A1 offenbart eine Anwenderplattform, welche für einen Zugriff auf einen Dienst oder eine Anwendung in einem Netzwerk zertifizierbar ist. Die Druckschrift EP 2 814 277 A1 offenbart einen Verifikationsmechanismus für zertifizierbare Komponenten.

Es ist daher eine Aufgabe der vorliegenden Erfindung, die Zertifizierung bzw. Rezertifizierung einer sicherheitskritischen Funktionskette zu vereinfachen. Diese Aufgabe wird durch eine Anlage mit den in Patentanspruch 1 angegebenen Merkmalen gelöst.

Im Weiteren werden mögliche Ausführungsformen der verschiedenen Aspekte gemäß der Erfindung unter Bezugnahme auf die beigefügten Figuren detailliert beschrieben.

Die Erfindung wird durch die beigefügten Ansprüche bestimmt.

Es zeigen:
- Fig. 1: ein schematisches Blockschaltbild zur Erläuterung der Funktionsweise eines Verfahrens zum Zertifizieren einer sicherheitskritischen Funktionskette;
- Fig. 2: ein Ablaufdiagramm zur Darstellung eines möglichen beispielhaften Verfahrens zum Zertifizieren einer sicherheitskritischen Funktionskette gemäß dem ersten Aspekt der Erfindung;
- Fig. 3: ein Signalablaufdiagramm zur Darstellung eines Beispiels eines Verfahrens zum Zertifizieren einer sicherheitskritischen Funktionskette;
- Figuren 4, 5: schematische Darstellungen möglicher sicherheitskritischer Funktionsketten;
- Fig. 6: eine schematische Darstellung eines Ausführungsbeispiels einer Anlage, bei dem das Verfahren zum Zertifizieren einer sicherheitskritischen Funktionskette eingesetzt werden kann;
- Fig. 7: eine schematische Darstellung zur Erläuterung eines möglichen Ablaufs einer Zertifikatsprüfung bei der in Fig. 6 dargestellten Anlage;
- Fig. 8: eine schematische Darstellung eines möglichen Ablaufs einer Zertifikatsprüfung bei Erneuerung einer Komponente der in Fig. 6 dargestellten Anlage;
- Fig. 9: eine schematische Darstellung einer negativ verlaufenden Zertifikatsprüfung einer erneuerten Komponente innerhalb der in Fig. 6 dargestellten Anlage;
- Fig. 10: eine schematische Darstellung eines Verfahrens zum Bereitstellen einer Kommunikationsverbindung zwischen Komponenten einer sicherheitskritischen Funktionskette;
- Fig. 11: ein Signaldiagramm zur Darstellung eines Beispiels des in Fig. 10 dargestellten Verfahrens zum Bereitstellen einer gesicherten Kommunikationsverbindung zwischen Komponenten einer sicherheitskritischen Funktionskette;
- Fig. 12: eine schematische Darstellung der Aktivierung einer Schnittstelle zwischen zwei Komponenten einer sicherheitskritischen Funktionskette;
- Fig. 13: eine weitere schematische Darstellung zur Erläuterung der Aktivierung einer Randkomponente einer sicherheitskritischen Funktionskette;
- Fig. 14: eine schematische Darstellung einer erfindungsgemäßen Komponente für eine sicherheitskritische Funktionskette;
- Fig. 15: eine weitere schematische Darstellung eines Ausführungsbeispiels einer erfindungegemäßen Komponente für eine sicherheitskritische Funktionskette;
- Fig. 16: ein Datenstrukturdiagramm eines exemplarischen Ausführungsbeispiels eines Zertifikates, das für die in den Figuren 14, 15 dargestellten erfindungsgemäßen Komponenten verwendet werden kann.

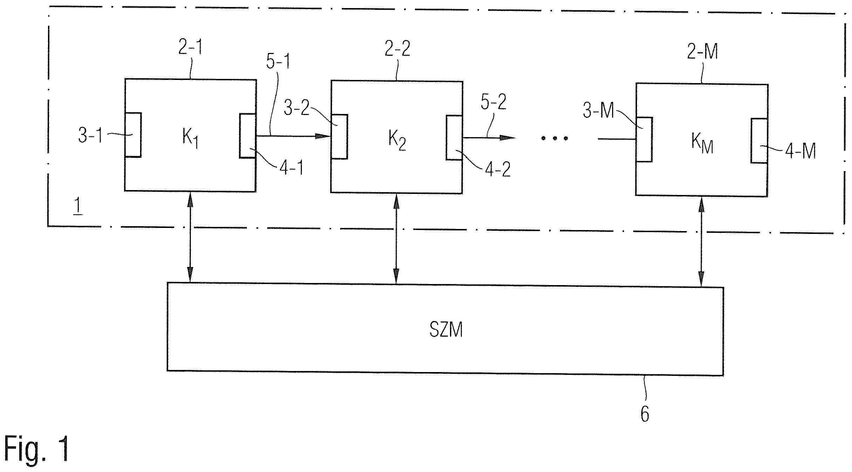

Fig. 1 zeigt eine Funktionskette 1, die mehrere erfindungsgemäße Komponenten 2-1, 2-2 ... 2-M umfasst. Die Komponenten sind miteinander über Kommunikationsverbindungen verbunden. Bei den Komponenten 2-i kann es sich um Hardwarekomponenten und/oder Softwarekomponenten handeln. Die Funktionskette 1 umfasst bei dem in Fig. 1 dargestellten Ausführungsbeispiel mehrere seriell verkettete Komponenten zur Bereitstellung einer Sicherheitsfunktion. Die Funktionskette 1 stellt eine Funktion bereit, die im Fehlerfall die Gesundheit einer Person gefährden kann. Zur Verkettung der Komponenten weisen die verschiedenen Komponenten jeweils Schnittstellen auf, wie in Fig. 1 dargestellt. Dabei kann es sich um Hardwareschnittstellen oder Softwareschnittstellen handeln. In dem dargestellten Ausführungsbeispiel weist jede der Komponenten 2-i der sicherheitskritischen Funktionskette 1 eine Ausgabe-Komponentenschnittstelle 4-i der Komponente auf, die jeweils mit der nächsten Eingabe-Komponentenschnittstelle 3-(i+1) der benachbarten Komponente 2-(i+1) über eine Kommunikationsverbindung 5-i drahtlos und/oder drahtgebunden verbunden ist. Die Kommunikationsverbindungen 5-i sind vorzugsweise unidirektional, d.h. bei aufgebauter Kommunikationsverbindung werden von einer Ausgabe-Komponentenschnittstelle Daten oder Nachrichten zu der Eingabe-Komponentenschnittstelle der nächsten benachbarten Komponente in einer Richtung übertragen, sodass innerhalb der sicherheitskritischen Funktionskette eine Kausalitätsbeziehung besteht.

Die Komponenten 2-i der sicherheitskritischen Funktionskette 1 können mit einem Sicherheitszertifikatsmanager 6 bidirektional kommunizieren, wie in Fig. 1 dargestellt. Die Kommunikation mit dem Sicherheitszertifikatsmanager 6 kann bei einer möglichen Ausführungsform über separate Kommunikationsverbindungen erfolgen. Alternativ kann die Kommunikation mit dem Sicherheitszertifikatsmanager 6 über die Kommunikationsverbindungen 5-i erfolgen. Dieser kann beispielsweise Anforderungsnachrichten bzw. Requests für Sicherheitszertifikate über die erste Eingabe-Schnittstelle 3-1 der sicherheitskritischen Funktionskette 1 einspeisen und Sicherheitszertifikate von der Ausgabe-Komponentenschnittstelle 4-M der letzten innerhalb der sicherheitskritischen Funktionskette 1 vorhandenen Komponente 2-M erhalten.

Der Sicherheitszertifikatsmanager 6 bildet bei einer möglichen Ausführungsform eine separate Komponente außerhalb der sicherheitskritischen Funktionskette 1, wie in Fig. 1 dargestellt. Bei einer alternativen Ausführungsform ist der Sicherheitszertifikatsmanager 6 in einer der Komponenten 2-i der sicherheitskritischen Funktionskette 1 integriert. Für jede der Komponente 2-i der sicherheitskritischen Funktionskette 1 ist mindestens ein Komponentensicherheitszertifikat KSZ vorgesehen. Ferner besitzt jede Komponentenschnittstelle, d.h. jede Eingabe-Komponentenschnittstelle 3-i und jede Ausgabe-Komponentenschnittstelle 4-i, ein zugehöriges Schnittstellensicherheitszertifikat SSZ. Die Komponentensicherheitszertifikate KSZ und die Schnittstellensicherheitszertifikate SSZ sind digitale Zertifikate, die in einem Speicherbereich abgespeichert sein können. Der Sicherheitszertifikatsmanager 6 hat Zugriff auf die Komponentensicherheitszertifikate KSZ der innerhalb der Funktionskette 1 miteinander verketteten Komponenten 2-i und auf die Schnittstellensicherheitszertifikate SSZ der miteinander verketteten Schnittstellen. Dies erlaubt eine zentrale Prüfung der digitalen Zertifikate durch den Sicherheitszertifikatsmanager 6 der sicherheitskritischen Funktionskette 1. Der Sicherheitszertifikatsmanager 6 kann anhand vorgegebener Sicherheitsanforderungen für die sicherheitskritische Funktionskette 1 eine zentrale automatische Zertifizierung bzw. Rezertifizierung durchführen. Wird die Komponentensicherheitszertifikatsprüfung und die Schnittstellensicherheitszertifikatsprüfung seitens des Sicherheitszertifikatsmanagers 6 erfolgreich durchgeführt, werden automatisch die Komponenten 2-i der sicherheitskritischen Funktionskette 1 durch den Sicherheitszertifikatsmanager 6 freigegeben. Falls die Gesamtheit aller Zertifikate, d.h. die Komponentensicherheitszertifikate KSZ und alle Schnittstellensicherheitszertifikate SSZ den Sicherheitsanforderungen für die sicherheitskritische Funktionskette 1 genügt, gibt der Sicherheitszertifikatsmanager 6 die verschiedenen Komponenten 2-i der sicherheitskritischen Funktionskette 1 frei. Die Komponenten der sicherheitskritischen Funktionskette 1 stellen bei einer möglichen Ausführungsform eine Sicherheitsfunktion bereit.

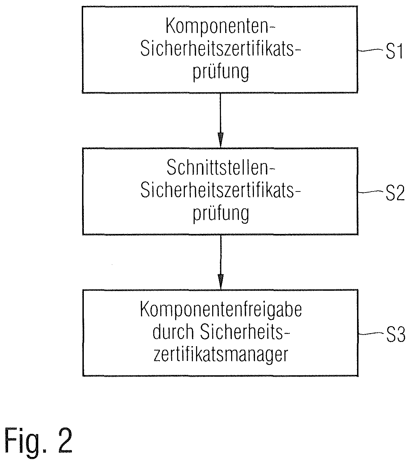

Fig. 2 zeigt ein Ablaufdiagramm zur Darstellung eines Ausführungsbeispiels des einesVerfahrens zum Zertifizieren einer sicherheitskritischen Funktionskette 1 gemäß einem ersten Aspekt der Erfindung. Das Verfahren dient zum Zertifizieren bzw. Rezertifizieren einer komplexen sicherheitskritischen Funktionskette 1, die mehrere miteinander über Kommunikationsverbindungen verkettete Komponenten zur Bereitstellung einer Sicherheitsfunktion aufweist. Im Schritt S1 erfolgt eine Komponentensicherheitszertifikatsprüfung durch einen Sicherheitszertifikatsmanager 6. Die Komponentensicherheitszertifikate KSZ der verketteten Komponenten 2-i werden durch den Sicherheitszertifikatsmanager 6 anhand vorgegebener Sicherheitsanforderungen geprüft. Die Sicherheitsanforderungen können in einem Datenspeicher des Sicherheitszertifikatsmanagers 6 gespeichert sein oder über eine Schnittstelle eingegeben werden. Die Sicherheitsanforderungen können anhand von Sicherheitsleveln definiert sein. Die Komponentensicherheitszertifikate KSZ geben ein Komponentensicherheitslevel KSL der jeweiligen Komponente 2-i innerhalb der sicherheitskritischen Funktionskette 1 an. Weiterhin geben die Schnittstellensicherheitszertifikate SSZ der verschiedenen Komponentenschnittstellen jeweils ein Schnittstellensicherheitslevel SSL der jeweiligen Komponentenschnittstelle an. Bei der Komponentensicherheitszertifikatsprüfung im Schritt S1 wird durch den Sicherheitszertifikatsmanager 6 geprüft, ob ein Komponentensicherheitslevel KSL, das in dem Komponentensicherheitszertifikat KSZ der betreffenden Komponente 2-i angegeben ist, für ein gemäß den vorgegebenen Sicherheitsanforderungen gefordertes Komponentensicherheitslevel KSL der betreffenden Komponente 2-i genügend bzw. ausreichend ist.

In einem weiteren Schritt S2 erfolgt seitens des Sicherheitszertifikatsmanagers 6 eine Schnittstellensicherheitszertifikatsprüfung. Bei der Schnittstellensicherheitszertifikatsprüfung werden Schnittstellensicherheitszertifikate SSZ der beiden über eine Kommunikationsverbindung 5 verbundenen Komponentenschnittstellen 4, 3 von zwei innerhalb der sicherheitskritischen Funktionskette 1 benachbarter Komponenten 2-i, 2-(i+1) dahingehend geprüft, ob die darin jeweils angegebenen Schnittstellensicherheitslevel SSL zueinander kompatibel bzw. passend sind. Bei einer möglichen Ausführungsform gibt ein Schnittstellensicherheitszertifikat SSZ einer Komponentenschnittstelle ein minimales Schnittstellensicherheitslevel SSL_{MIN} und/oder ein maximales Schnittstellensicherheitslevel SSL_{MAX} der jeweiligen Komponentenschnittstelle an. Bei einer Ausführungsform wird im Zuge der Schnittstellenzertifikatsprüfung im Schritt S2 geprüft, ob das von der Ausgabe-Komponentenschnittstelle 4 einer ersten Komponente 2-i gebotene bzw. zur Verfügung gestellte Schnittstellensicherheitslevel SSL-AUS, welches in dem Schnittstellensicherheitszertifikat SSZ der Ausgabe-Komponentenschnittstelle 4-i einer Komponente 2-i angegeben ist, für eine von einer Eingabe-Komponentenschnittstelle 3-(i+1) der nächsten Komponente 2-(i+1) geforderte Schnittstellensicherheitslevel SSL-EIN, welches in dem Schnittstellensicherheitszertifikat SSZ der Eingabe-Komponentenschnittstelle 3-(i+1) der nächsten Komponente 2-(i+1) angegeben ist, ausreichend ist. Ist beispielsweise das Schnittstellensicherheitslevel SSL der Ausgabe-Komponentenschnittstelle 4-i der ersten Komponente 2-i größer oder gleich dem von der Eingabe-Komponentenschnittstelle 3-(i+1) der zweiten Komponente 2-(i+1) geforderten Schnittstellensicherheitslevel SSL, so ist die Schnittstellensicherheitszertifikatsprüfung im Schritt S2 an dieser Stelle der Funktionskette 1 erfolgreich. Hat beispielsweise das von der Ausgabe-Komponentenschnittstelle 4-i der ersten Komponente 2-i angebotene Schnittstellensicherheitslevel, SSL, das in dem Schnittstellensicherheitszertifikat SSZ der Ausgabe-Komponentenschnittstelle 4-i einer Komponente 2-i angegeben ist, einen Wert 5, (SSL-AUS=5) und hat das von der Eingabe-Komponentenschnittstelle 3-(i+1) der nächsten Komponente 2-(i+1) geforderte Schnittstellensicherheitslevel SSL, das im Schnittstellensicherheitszertifikat SSZ der Eingabe-Komponentenschnittstelle 3-(i+1) der zweiten benachbarten Komponente 2-(i+1) angegeben ist, einen Wert 4 (SSL-EIN=4), so sind die beiden Schnittstellensicherheitslevel SSL der beiden Komponentenschnittstellen miteinander kompatibel, sodass die Schnittstellensicherheitszertifikatsprüfung an dieser Stelle erfolgreich durchgeführt werden kann. Die im Schritt S1 verwendeten Komponentensicherheitszertifikate KSZ und die Schnittstellensicherheitszertifikate SSZ der Komponentenschnittstellen, die im Schritt S2 verwendet werden, werden vorzugsweise in einem manipulationssicheren Datenspeicher abgespeichert und können zu ihrer Prüfung an den Sicherheitszertifikatsmanager 6 übertragen werden.

Im Schritt S3 erfolgt eine Komponentenfreigabe durch den Sicherheitszertifikatsmanager 6, falls die Komponentenzertifikatsprüfung im Schritt S1 und die Schnittstellensicherheitszertifikatsprüfung im Schritt S2 erfolgreich sind. Nach Freigabe der Komponenten 2-i innerhalb der sicherheitskritischen Funktionskette 1 können die verschiedenen Komponenten 2-i ihre Komponentenschnittstellen, d.h. die Eingabe-Komponentenschnittstellen 3-i und die Ausgabe-Komponentenschnittstellen 4-i aktivieren, sodass die sicherheitskritische Funktionskette 1 insgesamt aktiviert wird.

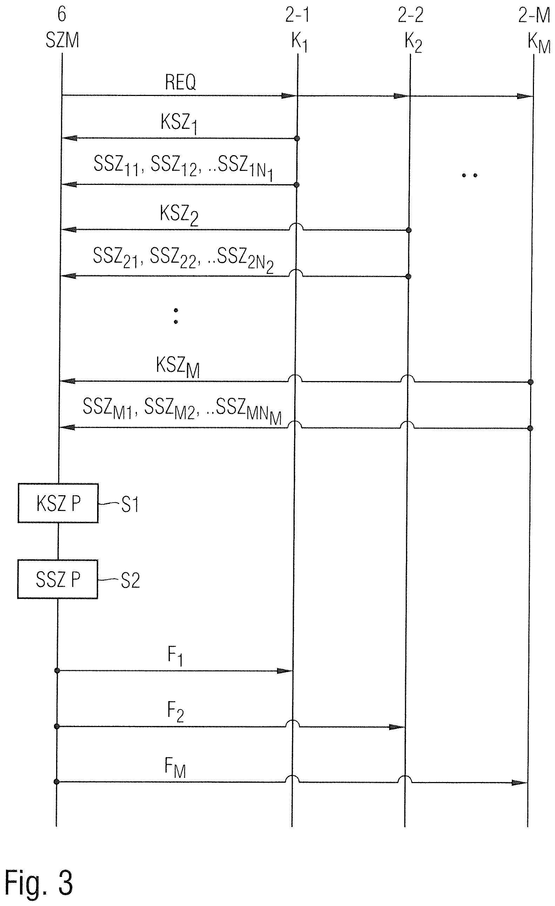

Fig. 3 zeigt ein Signalablaufdiagramm eines Ausführungsbeispiels des Verfahrens zum Zertifizieren einer sicherheitskritischen Funktionskette 1. Zunächst überträgt der Sicherheitszertifikatsmanager 6 einen Request bzw. eine Anforderung an Komponenten 2-i der sicherheitskritischen Funktionskette 1, wobei der Sicherheitszertifikatsmanager 6 von den Komponenten der sicherheitskritischen Funktionskette 1 deren digitale Zertifikate anfordert. Der Sicherheitszertifikatsmanager 6 kann die Zertifikate von den Komponenten 2-i parallel bzw. gleichzeitig, wie in Fig. 3 dargestellt, oder nacheinander anfordern. Der Sicherheitszertifikatsmanager 6 fordert bei dem dargestellten Beispiel zunächst die erste Komponente 2-1 auf, ihr Komponentensicherheitszertifikat KSZ1 und die verschiedenen Schnittstellensicherheitszertifikate SSZ für die verschiedenen Komponentenschnittstellen der Komponente 2-1 zu übertragen. Jede Komponente 2-i kann eine Anzahl N von Komponentenschnittstellen besitzen. Bei dem in Fig. 1 dargestellten Beispiel besitzt jede Komponente 2-i der sicherheitskritischen Funktionskette 1 zwei Komponentenschnittstellen, nämlich eine Eingabe-Komponentenschnittstelle 3-i und eine Ausgabe-Komponentenschnittstelle 4-i. Dementsprechend besitzt bei dem in Fig. 1 dargestellten Beispiel jede Komponente 2-i zwei Schnittstellensicherheitszertifikate SSZ. Allgemein besitzt jede Komponente 2-i eine vorgegebene Anzahl N von Komponentenschnittstellen und eine entsprechende Anzahl N von zugehörigen Schnittstellensicherheitszertifikaten SSZ. Die erste Komponente 2-1, die N1 Komponentenschnittstellen besitzt, sendet eine entsprechende Anzahl N1 von Schnittstellensicherheitszertifikaten SSZ an den anfragenden Sicherheitszertifikatsmanager 6. In entsprechender Weise überträgt die nächste Komponente 2-2 ihr Komponentensicherheitszertifikat KSZ2 sowie N2 Schnittstellenzertifikate SSZ für ihre N2 Komponentenschnittstellen an den Sicherheitszertifikatsmanager 6. Auf diese Weise erhält der Sicherheitszertifikatsmanager 6 nach und nach die Komponentensicherheitszertifikate KSZ sowie alle Schnittstellensicherheitszertifikate SSZ der verschiedenen Komponenten 2-i, wie in Fig. 3 dargestellt. Auf Basis der Komponentenschnittstellensicherheitszertifikate KSZ und der Schnittstellensicherheitszertifikate SSZ führt der Sicherheitszertifikatsmanager 6 eine Sicherheitszertifikatsprüfung durch. Dabei wird vorzugsweise geprüft, ob ein Komponentensicherheitslevel KSL der Komponente 2, die im Komponentensicherheitszertifikat KSZ der betreffenden Komponente angegeben ist, für das Sicherheitslevel der Komponente gemäß den vorgegebenen Sicherheitsanforderungen ausreichend ist. Im Zuge der Schnittstellenzertifikatsprüfung im Schritt S2 werden Schnittstellensicherheitszertifikate SSZ der beiden innerhalb der sicherheitskritischen Funktionskette 1 benachbarten Komponenten dahingehend geprüft, ob die Schnittstellensicherheitslevel SSL zueinander passen bzw. kompatibel sind. Ist sowohl die Komponentensicherheitszertifikatsprüfung im Schritt S1 als auch die Schnittstellensicherheitszertifikatsprüfung im Schritt S2 erfolgreich, werden seitens des Sicherheitszertifikatsmanagers 6 die Komponenten 2-i der sicherheitskritischen Funktionskette 1 freigegeben. Hierzu kann der Sicherheitszertifikatsmanager 6 Freigabenachrichten F1, F2 ... Fₘ an die verschiedenen Komponenten 2-i der sicherheitskritischen Funktionskette 1 übertragen, wie in Fig. 3 dargestellt. Falls die Gesamtheit aller Zertifikate die Sicherheitsanforderungen erfüllen, gibt der Sicherheitszertifikatsmanager 6 die einzelnen Komponenten 2-i der sicherheitskritischen Funktionskette 1 frei. Anschließend aktivieren die verschiedenen Komponenten 2-i der sicherheitskritischen Funktionskette 1 ihre Komponentenschnittstellen und stellen die gewünschte Sicherheitsfunktion bereit. Falls ein digitales Zertifikat einer Komponente 2-i nicht die geforderten Sicherheitsanforderungen erfüllt, kann der Sicherheitszertifikatsmanager 6 die jeweilige Komponente innerhalb der sicherheitskritischen Funktionskette 1 sperren.

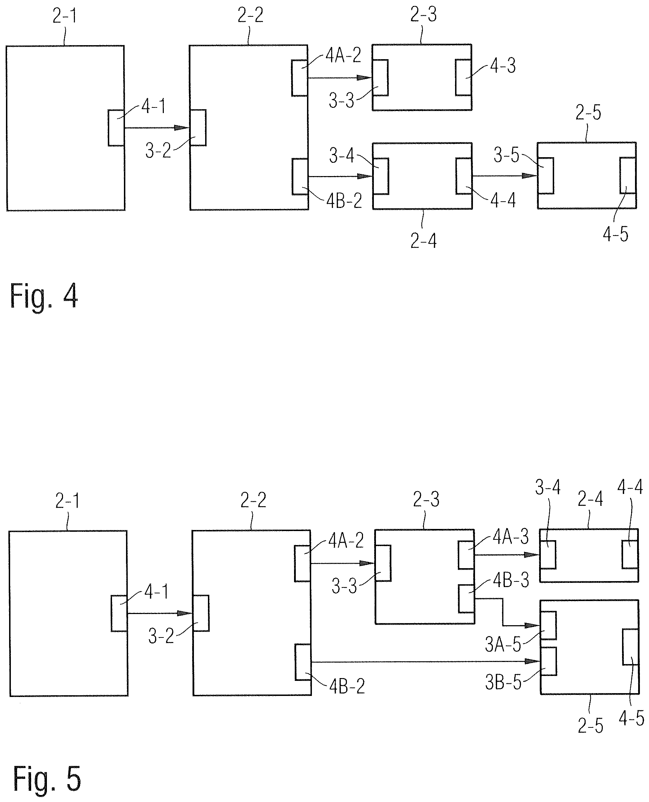

Figuren 4, 5 zeigen weitere Beispiele für Systeme bzw. Anlagen, welche sicherheitskritische Funktionsketten 1 beinhalten. Bei dem in Fig. 1 dargestellten Beispiel besitzt das System eine einzige lineare sicherheitskritische Funktionskette 1 mit seriell verketteten Hardware- oder Softwarekomponenten 2-i. Dabei haben alle Komponenten 2-i jeweils eine Eingabe-Komponentenschnittstelle 3-i und eine Ausgabe-Komponentenschnittstelle 4-i. Wie in Fig. 4 dargestellt, kann jede Komponente auch mehrere Komponentenschnittstellen aufweisen. Die zweite Komponente 2-2 besitzt beispielsweise zwei Ausgabe-Komponentenschnittstellen 4A-2, 4B-2. Hierdurch ergeben sich zwei sicherheitskritische Funktionsketten 1 innerhalb des Systems, nämlich eine erste sicherheitskritische Funktionskette 1, gebildet aus den verketteten Komponenten 2-1, 2-2, 2-3, und eine zweite sicherheitskritische Funktionskette 1, gebildet aus den verketteten Komponenten 2-1, 2-2, 2-4, 2-5.

Weiterhin können Komponenten auch mehrere Eingabe-Komponentenschnittstellen aufweisen, wie beispielsweise in Fig. 5 gezeigt. Beispielsweise hat die Komponente 2-5 zwei Eingabe-Komponentenschnittstellen 3A-5, 3B-5. Bei diesem System ergeben sich somit drei sicherheitskritische Funktionsketten 1, nämlich eine erste sicherheitskritische Funktionskette bestehend aus den Komponenten 2-1, 2-2, 2-3, 2-4, eine zweite sicherheitskritische Funktionskette bestehend aus den Komponenten 2-1, 2-2, 2-3, 2-5 und eine weitere sicherheitskritische Funktionskette bestehend aus den Komponenten 2-1, 2-2, 2-5, die durch den Sicherheitszertifikatsmanager 6 separat geprüft und zertifiziert werden. Eine Freigabe des Systems erfolgt, nachdem alle Funktionsketten 1 erfolgreich seitens des Sicherheitszertifikatsmanagers 6 im Hinblick auf die Sicherheitsanforderungen geprüft worden sind. Innerhalb des Systems kommunizieren zwei Komponentenschnittstellen von zwei benachbarten Komponenten miteinander. Die Kommunikationsverbindung kann dabei eine drahtlose Verbindung, z.B. WLAN, oder eine drahtgebundene Verbindung, beispielsweise ein serieller oder paralleler Datenbus, sein.

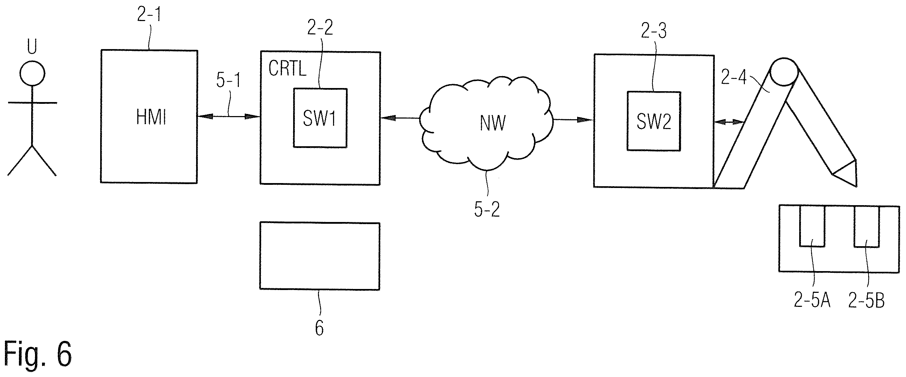

Fig. 6 zeigt ein Ausführungsbeispiel einer technischen Anlage mit einer sicherheitskritischen Funktionskette 1, die aus mehreren miteinander verketteten Hardware- und Softwarekomponenten 2 besteht. Ein Industrieroboterarm einer Fertigungsanlage stellt eine sicherheitskritische Funktion bereit, da eine Person in der Nähe des Industrieroboters gefährdet werden kann. Der Industrieroboterarm wird durch Hard- und Softwarekomponenten angesteuert, die in einer Funktionskette seriell miteinander verschaltet sind. Eine Nutzerschnittstelleneinheit 2-1 ist mit einer Steuerung der Anlage verbunden. Hierzu weist die Nutzerschnittstelleneinheit 2-1 eine Ausgabe-Komponentenschnittstellenstelle auf, die mit einer Eingabe-Komponentenschnittstelle der Anlagensteuerung verbunden ist. Die Anlagensteuerung enthält einen Mikroprozessor, der ein Steuerprogramm als Softwarekomponente 2-2 ausführt. Eine Kommunikationsverbindung zwischen der Nutzereingabeschnittstelle 2-1 und der Softwarekomponente 2-2 wird über Steuer- und Datenleitungen 5-1 gebildet. Die Anlagensteuerung der Anlage steuert über ein Datennetzwerk als Kommunikationsverbindung 5-2 eine weitere Softwarekomponente 2-3, die in einer lokalen Roboterarmsteuerung der Fertigungsanlage implementiert ist. Die Softwarekomponente 2-3 steuert ihrerseits den Roboterarm als Hardwarekomponente 2-4 an, wie in Fig. 6 dargestellt. Der Roboterarm besitzt beispielsweise an seiner Spitze eine Vorrichtung zum Herausnehmen von verschiedenen Werkzeugen bzw. Tools zur Durchführung von Fertigungsschritten innerhalb der Fertigungsanlage. Hierzu entnimmt der Roboterarm 2-4 Werkzeuge bzw. Tools 2-5A, 2-5B aus einer Werkzeughalteeinrichtung. Bei dem dargestellten Ausführungsbeispiel der Fertigungsanlage umfasst die sicherheitskritische Funktionskette 1 die Komponente 2-1, die beiden Softwarekomponenten 2-2, 2-3 sowie den Roboterarm als Hardwarekomponente 2-4. In dem dargestellten Beispiel kann die sicherheitskritische Funktionskette 1 um eine Hardwarekomponente während des Betriebes erweitert werden, wobei es sich bei der zusätzlichen Hardwarekomponente entweder um das Werkzeug 2-5A oder das Werkzeug 2-5B handelt.

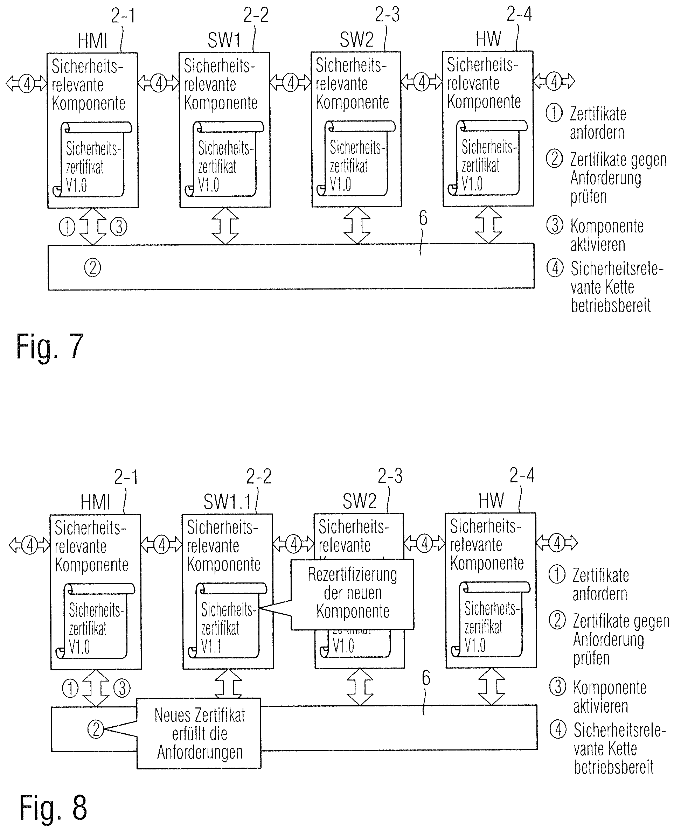

Fig. 7 zeigt schematisch die in Fig. 6 dargestellte Fertigungsanlage zur Erläuterung des Zertifizierungsverfahrens. Dabei verfügt jede Komponente 2-i der sicherheitskritischen Funktionskette 1 über mindestens ein Sicherheitszertifikat mit der Versionsnummer V1.0. Die verschiedenen Komponenten 2-i stellen sicherheitsrelevante Komponenten innerhalb der sicherheitskritischen Funktionskette 1 dar, die seriell miteinander verschaltet bzw. verkettet sind. Der Sicherheitszertifikatsmanager 6 überprüft die verschiedenen Sicherheitszertifikate der verschiedenen sicherheitsrelevanten Komponenten. Der Sicherheitszertifikatsmanager 6 fordert von den einzelnen sicherheitsrelevanten Komponenten 2-i, beispielsweise von der Nutzerschnittstelleneinheit 2-1, die zugehörigen digitalen Sicherheitszertifikate an. Die Sicherheitszertifikate umfassen Komponentensicherheitszertifikate KSZ und Schnittstellensicherheitszertifikate SSZ. In einem weiteren Schritt werden die angeforderten und an den Sicherheitszertifikatsmanager 6 übertragenen digitalen Zertifikate durch den Sicherheitszertifikatsmanager 6 hinsichtlich der Erfüllung von vorgegebenen Sicherheitsanforderungen geprüft.

Nach erfolgreichem Abschluss der Komponentensicherheitszertifikatsprüfung und der Schnittstellensicherheitszertifikatsprüfung der jeweiligen Komponente wird die sicherheitsrelevante Komponente 2-1 freigegeben. Sobald alle Komponenten seitens des Sicherheitszertifikatsmanagers 6 geprüft worden sind, werden die verschiedenen Komponentenschnittstellen der sicherheitsrelevanten Komponenten 2-i aktiviert, woraufhin die sicherheitskritische Funktionskette 1 betriebsbereit ist. Der Zertifizierungsvorgang der sicherheitskritischen Funktionskette 1 kann beispielsweise bei Inbetriebnahme der in Fig. 6 dargestellten Fertigungsanlage erfolgen. Die Zertifizierung der sicherheitskritischen Funktionskette 1 erfolgt vorzugsweise automatisch in Reaktion auf ein erkanntes Auslöseereignis. Bei einer möglichen Ausführungsform ist das Auslöseereignis eine Inbetriebnahme mindestens einer Komponente 2-i innerhalb der sicherheitskritischen Funktionskette 1. Bei einer weiteren möglichen Ausführungsform ist das Auslöseereignis für den Zertifizierungsvorgang ein Betriebszustandswechsel mindestens einer Komponente 2-i innerhalb der sicherheitskritischen Funktionskette 1. Vorzugsweise wird das Auslöseereignis durch den Sicherheitszertifikatsmanager 6 automatisch erfasst. Der Sicherheitszertifikatsmanager 6 führt bei einer Inbetriebnahme oder bei einem Anschalten der Fertigungsanlage den Zertifizierungsvorgang durch. Ferner überwacht der Sicherheitszertifikatsmanager 6 vorzugsweise die verschiedenen sicherheitsrelevanten Komponenten innerhalb der sicherheitskritischen Funktionskette 1, um einen relevanten Betriebszustandswechsel automatisch zu erkennen und anschließend den Zertifizierungsprozess in Gang zu setzen. Ferner kann bei einer möglichen Ausführungsform sensorisch erfasst werden, dass eine Komponente 2 innerhalb der sicherheitskritischen Funktionskette 1 durch eine andere Komponente ersetzt bzw. ausgetauscht wird. Ferner kann der Sicherheitszertifikatsmanager 6 bei einer möglichen Ausführungsform die Durchführung eines Softwareupdatevorganges bei einer Softwarekomponente innerhalb der sicherheitskritischen Funktionskette 1 erkennen und dann den Zertifizierungsvorgang einleiten.

Fig. 8 zeigt schematisch einen Rezertifizierungsprozess gemäß dem Zertifizierungsverfahren nach einem Softwareupdate der Softwarekomponente 2-2 der Fertigungsanlage. Mithilfe des erfindungsgemäßen Zertifizierungsverfahrens erfolgt die Zertifikatsprüfung der sicherheitsrelevanten Softwarekomponente 2-2 automatisch. Im Falle eines Softwareupdates der Softwarekomponente wird die Softwarekomponente innerhalb der sicherheitskritischen Funktionskette 1 mithilfe des erfindungsgemäßen Verfahrens isoliert rezertifiziert. Sie erhält dabei ein neues digitales Zertifikat mit der Versionsnummer V1.1. Sobald die neue, insbesondere upgedatete, Softwarekomponente der Funktionskette 1 ein Zertifikat mit der Versionsnummer V1.1 von dem Sicherheitszertifikatsmanager 6 erhalten hat, wird dies entsprechend den Sicherheitsanforderungen der Anlage automatisch geprüft. Nach erfolgreicher Rezertifizierung werden die verschiedenen Komponenten 2-i der Anlage durch den Sicherheitszertifikatsmanager 6 freigegeben und anschließend die zugehörigen Komponentenschnittstellen automatisch aktiviert, damit die Funktionskette 1 innerhalb der Anlage betriebsbereit ist.

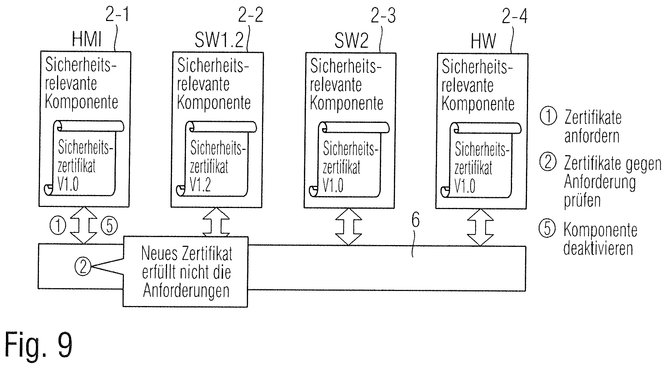

Fig. 9 zeigt eine negativ verlaufende Zertifikatsprüfung gemäß dem Zertifizierungsverfahren. In dem Beispiel wird die Softwarekomponente 2-2 erneut upgedatet. Bei dem Update der Komponente 2-2 wird die Komponente zunächst isoliert rezertifiziert und erhält ein Sicherheitszertifikat mit der Versionsnummer V1.2, wie in Fig. 9 dargestellt. Sobald die neue bzw. upgedatete Softwarekomponente 2-2 innerhalb der sicherheitskritischen Funktionskette 1 verbaut wird, wird das neue Sicherheitszertifikat V1.2 der sicherheitsrelevanten Komponente 2-2 von dem Sicherheitszertifikatsmanager 6 abgefragt und gemäß den vorgegebenen Sicherheitsanforderungen der Anlage automatisch geprüft. In dem dargestellten Beispiel erfüllt das neue Zertifikat V1.2 nicht die Sicherheitsanforderungen, sodass der Sicherheitszertifikatsmanager 6 automatisch die Komponenten 2-i der sicherheitskritischen Funktionskette 1 deaktiviert. Anschließend kann eine Fehlerbehandlung erfolgen. Die Sicherheitsanforderungen an die sicherheitskritische Funktionskette 1 können beispielsweise neu definiert werden und im Sicherheitszertifikatsmanager 6 hinterlegt werden.

Die Komponentensicherheitszertifikate KSZ und die Schnittstellensicherheitszertifikate SSZ weisen bei einer möglichen Ausführungsform jeweils Sicherheitslevel SL auf. Die Komponentensicherheitslevel KSL, die in den Komponentensicherheitszertifikaten KSZ der Komponenten 2-i angegeben sind, und/oder die Schnittstellensicherheitslevel SSL, die in den Schnittstellensicherheitszertifikaten SSZ der Komponentenschnittstellen der Komponenten 2-i angegeben sind, sind bei einer möglichen Ausführungsform fest vorkonfiguriert für die jeweiligen sicherheitsrelevanten Komponenten. Bei einer alternativen Ausführungsform können sich die Komponentensicherheitslevel KSL und/oder die Schnittstellensicherheitslevel SSL abhängig von Umgebungsbedingungen und/oder von Betriebszuständen der Komponenten 2-i innerhalb der sicherheitskritischen Funktionskette 1 ändern. Beispielsweise besitzt eine sicherheitsrelevante Komponente 2-i in einem ersten Betriebszustand der Komponente 2-i ein hohes Komponentensicherheitslevel KSL1 und in einem anderen Betriebszustand ein niedriges Komponentensicherheitslevel KSL2. Weiterhin kann der Betriebszustand einer Komponente 2-i auch die Schnittstellensicherheitslevel SSL der verschiedenen Schnittstellen der betreffenden Komponente beeinflussen. Beispielsweise besitzt eine Komponentenschnittstelle einer Komponente 2-i in einem ersten Betriebszustand der Komponente ein relativ hohes Schnittstellensicherheitslevel SSL1 und in einem anderen Betriebszustand der Komponente ein relativ niedriges Schnittstellensicherheitslevel SSL2. Die Komponentensicherheitslevel KSL und die Schnittstellensicherheitslevel SSL können sich somit bei dieser Ausführungsform dynamisch in Abhängigkeit von Betriebszuständen und/oder von Umgebungsbedingungen ändern. Bei einer möglichen Ausführungsform werden die Umgebungsbedingungen der Anlage seitens des Sicherheitszertifikatsmanagers 6 sensorisch erfasst. Die Umgebungsbedingungen umfassen beispielsweise physikalische Umgebungsparameter wie Temperatur oder Druck. Die Umgebungsbedingungen können auch die Position bzw. einen Ort der Komponente bzw. der gesamten Anlage umfassen, die auch Einfluss auf die herangezogenen Sicherheitsanforderungen haben. So wird beispielsweise von einer Anlage in einem ersten Temperaturbereich ein anderes Sicherheitslevel verlangt als in einem anderen Temperaturbereich. An eine Komponente, die sich an einem ersten Ort befindet, können höhere Sicherheitsanforderungen gestellt werden als an eine Komponente, die sich an einem anderen Ort befindet. Bei einer Ausführungsform sind die in der Funktionskette 1 verketteten Komponenten 2-i fest verbaut und stehen am selben Ort. Bei einer alternativen Ausführungsform verändern die innerhalb der Funktionskette 1 verketteten Komponenten 2-i relativ zueinander ihre momentane Position. Diese Komponenten sind vorzugsweise über drahtlose Kommunikationsverbindungen mit benachbarten Komponenten verbunden, wobei die Bewegung der Komponente 2-i die Komponentensicherheitslevel KSL der Komponente und/oder die Schnittstellensicherheitslevel SSL der verschiedenen Schnittstellen der betreffenden Komponente 2-i verändern kann. Bei einer Ausführungsform werden die Komponentensicherheitslevel KSL und die Schnittstellensicherheitslevel SSL im Zeitverlauf dekrementiert bzw. vermindert. Dies spiegelt beispielsweise eine Betriebszeit der Komponente wider. Beispielsweise wird ein Komponentensicherheitslevel KSL einer Komponente jährlich dekrementiert. Ab einem gewissen Zeitpunkt genügt das Komponentensicherheitslevel KSL der Komponente nicht mehr dem Sicherheitslevel für diese Komponente entsprechend den vorgegebenen Sicherheitsanforderungen der Anlage. Dann kann beispielsweise angezeigt werden, dass die entsprechende Komponente gewartet oder ausgetauscht werden muss und die Anlage anschließend rezertifiziert werden muss.

Die Komponentensicherheitszertifikate KSZ einer Komponente werden in einem manipulationssicheren Datenspeicher abgespeichert und durch den Sicherheitszertifikatsmanager 6 ausgelesen. Das Komponentensicherheitszertifikat KSZ einer Komponente 2 enthält verschiedene Informationen, die je nach Anwendungsfall variieren können. Bei einer möglichen Ausführungsform weist das Komponentensicherheitszertifikat KSZ einer Komponente 2 innerhalb der sicherheitskritischen Funktionskette 1 einige der folgenden Datenfelder auf, nämlich eine Versionsnummer V und ein Ablaufdatum, die durch den Sicherheitszertifikatsmanager 6 geprüft werden, um festzustellen, ob das Zertifikat noch gültig ist. In einem weiteren Datenfeld ist der Aussteller des Komponentensicherheitszertifikates KSZ angegeben. Das Zertifikat gibt vorzugsweise eine Art der betreffenden Komponente an, beispielsweise, ob es sich um eine Softwarekomponente oder um eine Hardwarekomponente handelt. Weiterhin ist vorzugsweise ein Komponentensicherheitslevel KSL der betreffenden Komponente 2 enthalten. Das Sicherheitslevel kann entweder fest konfiguriert sein oder sich beispielsweise in Abhängigkeit von Umgebungsbedingungen oder Betriebszuständen der Komponenten 2 ändern. Das Komponentensicherheitszertifikat KSZ umfasst vorzugsweise eine Hersteller-Identifizierung des Herstellers der Komponente. Beispielsweise können in einer bestimmten Anlage nur Komponenten eines bestimmten Herstellers zugelassen sein. Ferner enthält das Komponentensicherheitszertifikat KSZ vorzugsweise eine eindeutige Komponentenidentifizierung der betreffenden Komponente. Ferner umfasst das Komponentensicherheitszertifikat KSZ bereitgestellte Schnittstellensicherheitszertifikate SSZ für Komponentenschnittstellen der Komponente mit entsprechenden Schnittstellensicherheitsleveln. Darüber hinaus umfasst das Komponentensicherheitszertifikat KSZ vorzugsweise ferner benötigte Schnittstellensicherheitszertifikate SSZ für Eingabe-Komponentenschnittstellen der Komponente mit einem darin jeweils geforderten Schnittstellensicherheitslevel SSL der Eingabe-Komponentenschnittstelle. Somit kann der Sicherheitszertifikatsmanager 6 prüfen, ob die Sicherheitslevel zueinander passen bzw. kompatibel sind. Darüber hinaus kann das Komponentenschnittstellensicherheitszertifikat KSZ der Komponente 2 verschiedene Konfigurationsparameter der betreffenden Komponente umfassen. Beispielsweise können die Konfigurationsparameter eine zugelassene Laserleistung eines Roboterarmes innerhalb der Fertigungsanlage angeben. Ein Roboterarm hat beispielsweise eine Betriebserlaubnis nur für 50 KW, auch wenn er technisch 100 KW-Leistung bietet. Jede Komponente 2 innerhalb der sicherheitskritischen Funktionskette 1 führt seine Freigabedokumentation in Form eines digitalen Komponentensicherheitszertifikates KSZ mit sich. Vorzugsweise wird für jede Komponente 2 in einem dafür speziell vorgesehenen fälschungssicheren Speicherbereich das zugehörige digitale Zertifikat gespeichert. Dieses kann nur durch einen dafür vorgesehenen Sicherheitszertifikatsmanager 6 ausgelesen und geprüft werden. Mithilfe der elektronisch lesbaren digitalen Zertifikate kann auch während der Laufzeit eine Zertifizierung bzw. Rezertifizierung der sicherheitskritischen Funktionskette 1 automatisch durchgeführt werden.

Bei der in Fig. 6 dargestellten Anlage kann die sicherheitskritische Funktionskette 1 dynamisch verkürzt oder verlängert werden. Beispielsweise wird durch Aufnahme des Werkzeuges 2-5A die sicherheitskritische Funktionskette 1 verlängert. Dies stellt vorzugsweise ein Auslöseereignis dar, das einen Zertifizierungsprozess durch den Sicherheitszertifikatsmanager 6 triggert. Der Sicherheitszertifikatsmanager 6 führt eine Rezertifizierung der verlängerten sicherheitskritischen Funktionskette 1 durch. Bei Abgabe des Werkzeuges 2-5A wird die Funktionskette 1 um eine Hardwarekomponente verkürzt. Dies kann bei einer möglichen Ausführungsform einen erneuten Rezertifizierungsprozess während des Betriebes der Anlage auslösen.

Auch ein Nutzer bzw. User kann in den Rezertifizierungsprozess miteinbezogen werden. Beispielsweise kann der Nutzer U als Komponente betrachtet werden, der über ein Sicherheitszertifikat verfügt. Das Sicherheitszertifikat einer Person bzw. eines Nutzers weicht von einem Komponentensicherheitszertifikat einer konventionellen Hardware- oder Softwarekomponente ab. Beispielsweise kann seitens des Sicherheitszertifikatsmanagers 6 automatisch geprüft werden, ob der betreffende Nutzer ein Sicherheitslevel hat, um die Nutzerschnittstelle 2-1 der Anlage zu bedienen. Bei dieser Ausführungsform werden die Nutzer bzw. Bedienpersonen automatisch in den Zertifizierungs- bzw. Rezertifizierungsprozess miteinbezogen. Das Zertifizierungsverfahren zum Zertifizieren einer sicherheitskritischen Funktionskette 1 gemäß dem ersten Aspekt der Erfindung erlaubt, den Aufwand zur Zertifizierung einer sicherheitskritischen Funktionskette 1 deutlich zu reduzieren. Mit dem Zertifizierungsverfahren lassen sich Komponenten einer sicherheitskritischen Funktionskette 1 ersetzen, ohne eine Rezertifizierung der gesamten Funktionskette durchführen zu müssen. Bei einer Änderung innerhalb der sicherheitskritischen Funktionskette 1 kann mithilfe des erfindungsgemäßen Rezertifizierungsverfahrens die Zertifizierung automatisch in kürzester Zeit erfolgen, ohne dass die Betriebserlaubnis der Anlage verfällt.

Gemäß einem zweiten Aspekt der Erfindung wird ein Verfahren zum Bereitstellen einer gesicherten Kommunikationsverbindung KVB zwischen Komponenten 2 einer sicherheitskritischen Funktionskette 1 geschaffen, beispielsweise eine sichere Kommunikationsverbindung 5-i gemäß Fig. 1. Im Bereich der sicherheitskritischen Funktionsketten besteht derzeit kein einheitliches Konzept, welches angibt, wie die einzelnen sicherheitsrelevanten Komponenten 2-i der sicherheitskritischen Funktionsketten 1 innerhalb einer Anlage miteinander zu kommunizieren haben. Durch das Verfahren zum Bereitstellen einer gesicherten Kommunikationsverbindung kann der Aufwand zur Rezertifizierung der Kommunikationsverbindung erheblich reduziert werden. Vor Inbetriebnahme der Anlage befinden sich alle sicherheitskritischen Funktionsketten 1 der Anlage in einem sicheren, vorzugsweise isoliertem, insbesondere geerdeten, Betriebszustand. Dabei weisen die verschiedenen Komponenten 2 innerhalb der sicherheitskritischen Funktionskette 1 einen vordefinierten sicheren Betriebszustand auf, sodass keine ungewollte spontane Kommunikation zwischen den verschiedenen Komponenten entstehen kann.

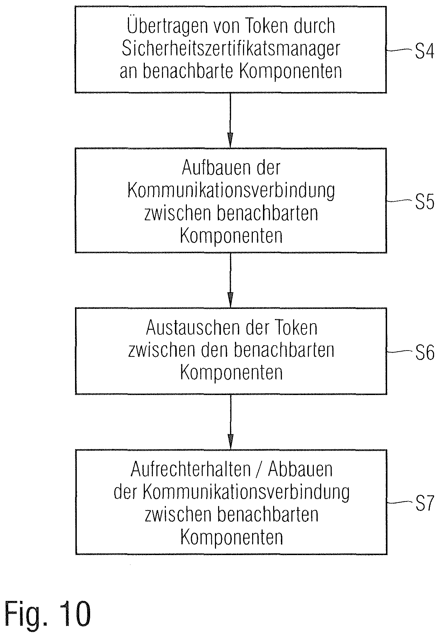

Bei dem Verfahren zum Bereitstellen einer gesicherten Kommunikationsverbindung zwischen Komponenten 2 einer sicherheitskritischen Funktionskette 1 werden zunächst im Schritt S4 identische Token T durch den Sicherheitszertifikatsmanager 6 an benachbarte Komponenten innerhalb der sicherheitskritischen Funktionskette 1 übertragen, wie in Fig. 10 dargestellt. Die beiden benachbarten Komponenten weisen dabei jeweils eine Komponentenschnittstelle für eine Kommunikationsverbindung mit der jeweils anderen benachbarten Komponente auf. Es werden anschließend die Komponentenschnittstellen der beiden benachbarten Komponenten innerhalb der sicherheitskritischen Funktionskette 1 im Schritt S5 zum Aufbau der betreffenden Kommunikationsverbindung zwischen den beiden benachbarten Komponenten aktiviert. Anschließend erfolgt in einem weiteren Schritt S6 ein gegenseitiges Austauschen der jeweils von dem Sicherheitszertifikatsmanager 6 durch die beiden benachbarten Komponenten erhaltenen Token T über die aufgebaute Kommunikationsverbindung. Die aufgebaute Kommunikationsverbindung zwischen den beiden benachbarten Komponenten der sicherheitskritischen Funktionskette 1 wird im Schritt S7 aufrechterhalten, falls die über die Kommunikationsverbindung zwischen den beiden benachbarten Komponenten ausgetauschten Token T identisch mit den von dem Sicherheitszertifikatsmanager 6 erhaltenen Token T sind. Bei einer möglichen Ausführungsform besitzen die an die beiden benachbarten Komponenten der sicherheitskritischen Funktionskette 1 übertragenen Token einen Ablaufzeitpunkt. Die Kommunikationsverbindung zwischen den beiden benachbarten Komponenten der sicherheitskritischen Funktionskette 1 kann nach Erreichen des Ablaufzeitpunktes des Tokens T entsprechend einem vorgegebenen Sicherheitslevel automatisch abgebaut werden, insbesondere durch Deaktivieren einer Schnittstelle. Die über die zwischen den beiden Komponenten aufgebaute Kommunikationsverbindung übermittelten Daten werden vorzugsweise entsprechend einem Sicherheitslevel verschlüsselt übertragen. Das Sicherheitslevel kann ein Komponentensicherheitslevel KSL einer Komponente 2 sein, das in einem Komponentensicherheitszertifikat KSZ der entsprechenden Komponente 2 angegeben ist. Das Sicherheitslevel kann ferner das Sicherheitslevel einer Komponentenschnittstelle der betreffenden Komponente sein, das in dem Schnittstellensicherheitszertifikat SSZ der Komponentenschnittstelle angegeben ist. Vorzugsweise versendet der Sicherheitszertifikatsmanager 6 nach Freigabe aller Komponenten der sicherheitskritischen Funktionskette 1 eine TAN-Liste an die Komponenten 2 der sicherheitskritischen Funktionskette 1. Die versendete TAN-Liste wird durch die Komponenten 2-i zur Verschlüsselung und/oder Entschlüsselung der über die Kommunikationsverbindung übertragenen Daten verwendet. Die versendete TAN-Liste weist vorzugsweise eine Listennummer und eine vorgegebene Anzahl von einmalig verwendbaren TAN-Nummern zur Kommunikation auf. Bei analogen Schnittstellen kann eine Verschlüsselung entfallen. Falls die Transaktionsnummern innerhalb der TAN-Liste zuneige gehen, kann die sicherheitskritische Funktionskette 1 diesen Umstand an den Sicherheitszertifikatsmanager 6 melden, der eine neue TAN-Liste an die Komponenten aussendet. Eine von dem Sicherheitszertifikatsmanager 6 übertragene Nachricht kann eine Nachrichten-ID, einen Zeitstempel, eine Checksumme über entschlüsselte Datencontainer, eine Listennummer der versendeten TAN-Liste, ein Element der TAN-Liste sowie einen verschlüsselten Datencontainer umfassen. Die TAN-Listennummer und die TAN-Elementnummer ist zu Aufzeichnungszwecken Bestandteil jeder Nachricht, die über die Kommunikationsverbindung übertragen wird. Die TAN-Nummer kann aus der TAN-Liste entweder sequenziell oder auch per Pseudozufallszahl ausgewählt werden. Jede TAN-Nummer wird vorzugsweise nur einmal verwendet. Die Länge der TAN-Nummer legt die Güte der Verschlüsselung fest. Eine Prüfsumme über den Datencontainer wird mit der TAN-Nummer verschlüsselt und kann dem Kommunikationspartner bzw. an die benachbarte Komponente übertragen werden. Der Empfänger vergleicht anschließend seine TAN-Liste/TAN-Position mit der in der empfangenen Nachricht. Die empfangene Nachricht wird nach erfolgreicher CRC-Prüfung als gültig angesehen werden und wird durch die Komponente weiterverarbeitet. Sind die beiden Parameter nicht identisch, wird die Nachricht seitens der Komponente verworfen, wobei bei dem Sicherheitszertifikatsmanager 6 eine Warnung ausgelöst werden kann.

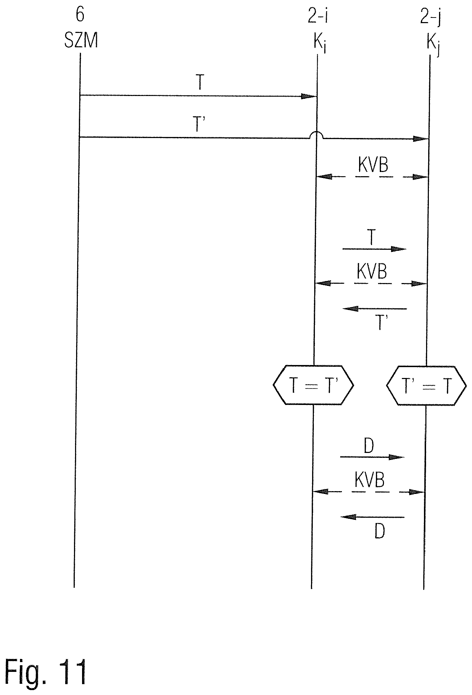

Fig. 11 zeigt ein Signalablaufdiagramm zur Erläuterung der Funktionsweise des erfindungsgemäßen Verfahrens zum Bereitstellen einer gesicherten Kommunikationsverbindung zwischen Komponenten einer sicherheitskritischen Funktionskette 1 gemäß dem zweiten Aspekt der Erfindung. Der Sicherheitszertifikatsmanager 6 überträgt zunächst ein identisches Token T, T' an zwei benachbarte Komponenten 2-1, 2-j der sicherheitskritischen Funktionskette 1, wie sie beispielsweise in Fig. 1 dargestellt ist. Die vorgesehenen Komponentenschnittstellen der beiden benachbarten Komponenten 2-i, 2-j dienen zum Aufbau einer Kommunikationsverbindung KVB zwischen den beiden benachbarten Komponenten, wie in Fig. 11 gezeigt. Zunächst aktiviert die erste Komponente 2-i eine Ausgabe-Komponentenschnittstelle und die zweite benachbarte Komponente 2-j eine Eingabe-Komponentenschnittstelle zum Aufbau der Kommunikationsverbindung KVB zwischen den beiden Komponenten. Daraufhin erfolgt ein Austausch der jeweils von dem Sicherheitszertifikatsmanager 6 durch die beiden Komponenten 2-i, 2-j erhaltenen Token T, T' über die aufgebaute Kommunikationsverbindung KVB. Es wird einerseits durch die erste Komponente 2-i und andererseits durch die zweite Komponente 2-j geprüft, ob das mit der jeweils anderen Komponente ausgetauschte Token T mit dem ursprünglich erhaltenen Token identisch ist. Falls die über die Kommunikationsverbindung KVB zwischen den beiden benachbarten Komponenten 2-i, 2-j ausgetauschten Token T identisch mit den von dem Sicherheitszertifikatsmanager 6 erhaltenen Token sind, wird die zwischen den beiden benachbarten Komponenten der sicherheitskritischen Funktionskette 1 aufgebaute Kommunikationsverbindung KVB aufrechterhalten, wie in Fig. 11 dargestellt. Über die Kommunikationsverbindung KVB können anschließend Daten vorzugsweise in verschlüsselter Form ausgetauscht werden. Kommt die erste Komponente 2-i zu dem Schluss, dass das von der anderen Komponente 2-j empfangene Token T' und das von dem Sicherheitszertifikatsmanager 6 ursprünglich erhaltene Token T abweichen, kann es seine Ausgabe-Komponentenschnittstelle deaktivieren, sodass die aufgebaute Kommunikationsverbindung KVB abgebaut wird. In gleicher Weise kann die zweite Komponente 2-j prüfen, ob das von ihr über die Kommunikationsverbindung erhaltene Token T mit dem von dem Sicherheitszertifikatsmanager 6 erhaltenen Token T' identisch ist. Falls dies nicht der Fall ist, kann die zweite Komponente 2-j ihre Eingabe-Komponentenschnittstelle deaktivieren, sodass die Kommunikationsverbindung KVB automatisch abgebaut wird und/oder eine Fehlermeldung an den Sicherheitszertifikatsmanager übertragen wird.

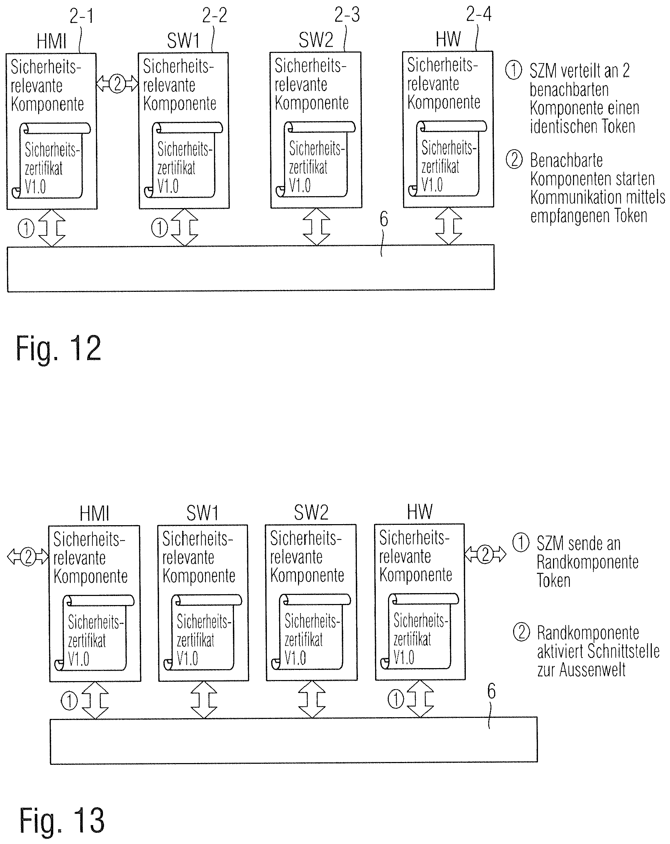

Der Sicherheitszertifikatsmanager 6 der Anlage kann Kommunikationsverbindungen KVB schrittweise nach und nach aktivieren, bis die Randkomponenten der Anlage erreicht sind. Die Randkomponenten sind die Komponenten an den Systemgrenzen der Anlage bzw. des Systems. Fig. 13 zeigt schematisch die Aktivierung einer Komponentenschnittstelle einer Randkomponente, beispielsweise der Komponenten 2-1, 2-4. Der Sicherheitszertifikatsmanager 6 sendet das Token T an die Randkomponente, die eine Komponentenschnittstelle zur Außenwelt, d.h. an der Systemgrenze, aktiviert, wie in Fig. 13 schematisch dargestellt.

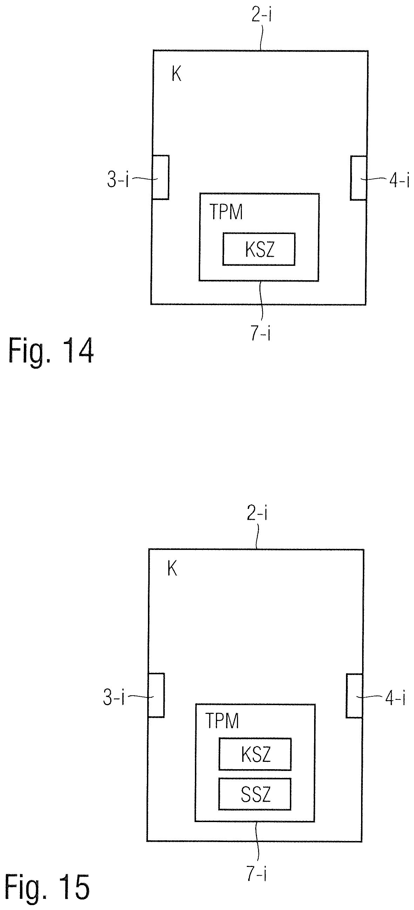

Die Erfindung schafft ferner gemäß einem dritten Aspekt eine Komponente 2-i für eine sicherheitskritische Funktionskette 1, wie sie schematisch in den Figuren 14, 15 dargestellt ist. Die Komponente 2-i besitzt dabei ein zugehöriges Komponentensicherheitszertifikat KSZ, das in einem zugehörigen manipulationssicheren Speicherbereich eines Datenspeichers gespeichert ist und zur Freigabe der Komponente 2-i innerhalb der sicherheitskritischen Funktionskette 1 durch einen Sicherheitszertifikatsmanager 6 verifizierbar ist. Bei einer bevorzugten Ausführungsform der erfindungsgemäßen Komponente ist das gespeicherte Komponentensicherheitszertifikat KSZ durch den Sicherheitszertifikatsmanager 6 der Anlage auslesbar und anhand vorgegebener Sicherheitsanforderungen hinsichtlich seiner Gültigkeit überprüfbar. Der Speicherbereich zum Speichern des Komponentensicherheitszertifikates der Komponente ist vorzugsweise in einem manipulationssicheren Datenspeicher vorgesehen, der in der Komponente integriert ist, wie in den Figuren 14, 15 dargestellt. Der in der Komponente integrierte Datenspeicher, der zur Speicherung des Komponentensicherheitszertifikates KSZ vorgesehen ist, ist vorzugsweise ein Trusted Platform Module 7, wie in den Figuren 14, 15 gezeigt. Bei einer alternativen Ausführungsvariante befindet sich der Speicherbereich zum Speichern des Komponentensicherheitszertifikates KSZ der Komponente 2 in einem manipulationssicheren Datenspeicher, der nicht in der Komponente 2 selbst integriert ist, sondern einen externen Datenspeicher bildet, der vorzugsweise durch eine Speicheradresse referenziert ist und auf den der Sicherheitszertifikatsmanager 6 Zugriff hat. Wie in Fig. 4 dargestellt, kann sich in dem Trusted Platform Module 7 der Komponente 2 das zugehörige Komponentensicherheitszertifikat KSZ der Komponente 2-i befinden, welches durch den Sicherheitszertifikatsmanager 6 zur Prüfung auslesbar ist.

Weiterhin kann sich in dem Trusted Platform Module 7-i der erfindungsgemäßen Komponente 2 neben dem Komponentensicherheitszertifikat KSZ auch Komponentenschnittstellensicherheitszertifikate SSZ befinden, die durch den Sicherheitszertifikatsmanager 6 zur Prüfung auslesbar sind.

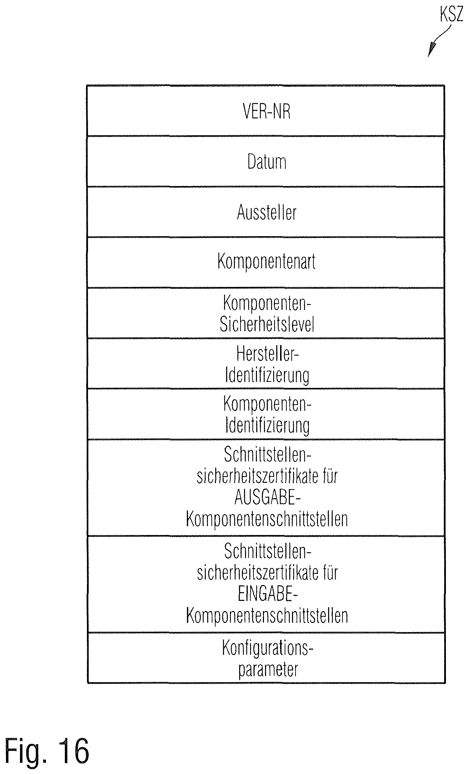

Fig. 16 zeigt schematisch eine Datenstruktur eines Ausführungsbeispiels eines Komponentensicherheitszertifikates KSZ, wie es in einem manipulationssicheren Datenspeicher 7 der erfindungsgemäßen Komponente 2 gespeichert sein kann. Das Komponentensicherheitszertifikat KSZ der Komponente 2 umfasst dabei eine Versionsnummer des Komponentensicherheitszertifikates, ein Ausgabedatum des Komponentensicherheitszertifikates, einen Aussteller des Komponentensicherheitszertifikates, eine Komponentenart der Komponente, ein Komponentensicherheitslevel KSL der Komponente, eine Hersteller-Identifizierung zur Identifizierung des Herstellers der Komponente, eine Komponentenidentifizierung der Komponente, Schnittstellensicherheitszertifikate SSZ für Ausgabe-Komponentenschnittstellen der Komponente mit einem darin jeweils angebotenen Schnittstellensicherheitslevel SSL der jeweiligen Ausgabe-Komponentenschnittstelle, Schnittstellensicherheitszertifikate SSZ für Eingabe-Komponentenschnittstellen der Komponente mit einem darin jeweils geforderten Schnittstellensicherheitslevel SSL der jeweiligen Eingabe-Komponentenschnittstelle sowie Konfigurationsparameter der betreffenden Komponente.

Bei einer möglichen Ausführungsform ist für jede Komponentenschnittstelle der erfindungsgemäßen Komponente 2 ein zugehöriges Schnittstellensicherheitszertifikat SSZ vorgesehen und in dem Trusted Platform Module 7 der Komponente manipulationssicher gespeichert. Bei dem erfindungsgemäßen System, wie es schematisch beispielhaft in Fig. 1 dargestellt ist, kann ein zentraler Sicherheitszertifikatsmanager 6 die Sicherheitszertifikate aller Komponenten und Schnittstellen verifizieren. Die Komponenten 2 einer Anlage bzw. eines Systems können bei einer Ausführungsvariante über eine gesicherte Schnittstelle miteinander kommunizieren, wobei die Anlage erst dann aktiviert wird, wenn alle sicherheitskritischen Funktionsketten 1 den Sicherheitsanforderungen genügen. Die Anzahl der verschiedenen Sicherheitslevel, die verwendet werden, kann variieren. Bei den digitalen Sicherheitszertifikaten kann es sich bei einer möglichen Ausführungsvariante um Public Key-Sicherheitszertifikate handeln. Die digitalen Zertifikate können bei einer möglichen Ausführungsform von einer Zertifizierungsinstanz ausgestellt werden. Die bei dem erfindungsgemäßen System verwendeten digitalen Sicherheitszertifikate, d.h. die Komponentensicherheitszertifikate KSZ und die Schnittstellensicherheitszertifikate SSZ, stellen digitale Datensätze dar, die bestimmte Eigenschaften von Objekten bzw. Komponenten bestätigen, wobei die Authentizität und Integrität der Angaben durch kryptografische Verfahren geprüft werden kann. Die Anlage ist beispielsweise eine Industrieanlage mit mindestens einer sicherheitskritischen Funktionskette 1, die aus mehreren miteinander verketteten Komponenten 2-i besteht. Dabei kann es sich um eine Anlage mit einer Vielzahl von verketteten Software- und/oder Hardwarekomponenten handeln. Ferner kann es sich bei der Anlage beispielsweise um ein Fahrzeug mit einer Vielzahl von darin integrierten Software- und/oder Hardwarekomponenten handeln. Die Erfindung schafft ferner einen Sicherheitszertifikatsmanager 6 für eine derartige sicherheitskritische Funktionskette 1, wobei der Sicherheitszertifikatsmanager 6 nach erfolgreicher Prüfung von Komponentensicherheitszertifikaten KSZ und von Komponentenschnittstellensicherheitszertifikaten SSZ die sicherheitskritische Funktionskette 1 automatisch freigibt. Der Sicherheitszertifikatsmanager 6 kann Teil der komplexen Anlage sein oder mit der zu zertifizierenden Anlage verbunden werden. Bei einer Ausführungsvariante ist der Sicherheitszertifikatsmanager 6 über ein Datennetzwerk mit einer entfernten zu zertifizierenden Anlage verbunden. Ferner kann der Sicherheitszertifikatsmanager 6 auch in einem lokalen Server der Anlage implementiert sein. Weiterhin kann der Sicherheitszertifikatsmanager 6 bei einer weiteren Ausführungsvariante in einer Komponente 2-i der sicherheitskritischen Funktionskette 1 selbst integriert sein. Bei einer weiteren Ausführungsvariante bildet der Sicherheitszertifikatsmanager 6 ebenfalls eine Komponente, d.h. der Sicherheitszertifikatsmanager 6 kann bei einer Ausführungsvariante eine Selbstüberprüfung ausführen, um zu überprüfen, ob er selbst noch den vorgegebenen Sicherheitsanforderungen entspricht.

### Bezugszeichenliste

- 1: Funktionskette
- 2: Komponente
- 3: Eingabe - Komponentenschnittstelle
- 4: Ausgabe - Komponentenschnittstelle
- 5: Kommunikationsverbindungen
- 6: Sicherheitszertifikatsmanager
- 7: manipulationssicherer Datenspeicher

## Patentansprüche

1. Anlage, mit:
einem Sicherheitszertifikatsmanager (6); und
mindestens einer sicherheitskritischen Funktionskette (1), die mehrere miteinander über Kommunikationsverbindungen, KVB, verkettete Komponenten (2) aufweist, welche jeweils ein zugehöriges Komponentensicherheitszertifikat, KSZ, haben, das in einem zugehörigen manipulationssicheren Speicherbereich eines Datenspeichers (7) gespeichert ist und zur Freigabe der Komponente (2) innerhalb der sicherheitskritischen Funktionskette (1) durch den Sicherheitszertifikatsmanager (6) verifizierbar ist,
wobei das KSZ Schnittstellensicherheitszertifikate, SSZ, für Ausgabe-Komponentenschnittstellen der Komponente (2) mit einem darin jeweils angegebenen Schnittstellensicherheitslevel, SSL, der jeweiligen Ausgabe-Komponentenschnittstelle sowie SSZ für Eingabe-Komponentenschnittstellen der Komponente (2) mit einem darin jeweils geforderten SSL der jeweiligen Eingabe-Komponentenschnittstelle aufweist, der Sicherheitszertifikatsmanager (6) dazu ausgelegt ist zu prüfen, ob ein Komponentensicherheitslevel KSL, das in den KSZ der verketteten Komponenten (2) angegeben ist, für ein gemäß vorgegebenen Sicherheitsanforderungen gefordertes Komponentensicherheitslevel, KSL, der betreffenden Komponente (2) ausreichend ist, und ob in den SSZ von über eine Kommunikationsverbindung, KVB, verbundenen Eingabe- und Ausgabe-Komponentenschnittstellen zweier innerhalb der sicherheitskritischen Funktionskette (1) benachbarter Komponenten (2) jeweils angegebene SSL zueinander kompatibel sind, und
der Sicherheitszertifikatsmanager (6) dazu ausgelegt ist, die sicherheitskritische Funktionskette (1) automatisch freizugeben, wenn die Prüfung aller KSL und SSL erfolgreich war.

2. Anlage nach Anspruch 1, wobei die gespeicherten KSZ durch den Sicherheitszertifikatsmanager (6) auslesbar und anhand vorgegebener Sicherheitsanforderungen hinsichtlich ihrer Gültigkeit überprüfbar sind.

3. Anlage nach Anspruch 1 oder 2, wobei der Speicherbereich zum Speichern des KSZ der Komponente (2) in einem manipulationssicheren Datenspeicher (7) vorgesehen ist, der in den Komponenten (2) integriert ist, oder in einem externen manipulationssicheren Datenspeicher vorgesehen ist, der durch eine Speicheradresse referenziert ist.

4. Anlage nach Anspruch 3, wobei der in den Komponenten (2) integrierte Datenspeicher (7) zum Speichern des KSZ ein Trusted Platform Module, TPM, aufweist.

5. Anlage nach einem der Ansprüche 1 bis 4,
wobei das KSZ der Komponenten (2) aufweist:
- eine Versionsnummer des KSZ,
- ein Ausgabedatum des KSZ,
- einen Aussteller des KSZ,
- eine Art der Komponente,
- eine Herstelleridentifizierung zur Identifizierung des Herstellers der Komponente,
- eine Komponentenidentifizierung der Komponente,
- Konfigurationsparameter der Komponente.

## Claims

1. System, comprising:
a security certificate manager (6); and
at least one security-critical functional chain (1), which comprises a plurality of components (2), which are chained together via communications connections, KVB, and which each have an associated component security certificate, KSZ, which is stored in an associated manipulation-proof memory area of a data memory (7) and is verifiable by the security certificate manager (6) for clearance of the components (2) within the security-critical functional chain (1),
wherein the KSZ has interface security certificates, SSZ, for output component interfaces of the component (2), having an interface security level, SSL, of the associated output component interface respectively specified therein, and SSZ for input component interfaces of the component (2), having an SSL of the associated input component interface respectively demanded therein,
the security certificate manager (6) is configured to check whether a component security level, KSL, specified in the KSZ of the chained components (2), is sufficient for a component security level, KSL, of the relevant component (2), which is required in accordance with predetermined security requirements, and whether SSL, respectively specified in the SSZ of input and output component interfaces, connected via a communications connection, KVB, of two components (2) adjacent within the security-critical functional chain (1), are compatible with one another, and the security certificate manager (6) is configured to clear the security-critical functional chain (1) automatically if the check on all KSL and SSL was successful.

2. System according to claim 1, wherein the stored KSZ can be read out by the security certificate manager (6) and checked for validity against predetermined security requirements.

3. System according to either claim 1 or claim 2, wherein the memory area for storing the KSZ of the component (2) is provided in a manipulation-proof data memory (7) integrated into the components (2) or in an external manipulation-proof data memory referenced by a memory address.

4. System according to claim 3, wherein the data memory (7) integrated into the components (2) for storing the KSZ has a trusted platform module, TPM.

5. System according to any of claims 1 to 4,
wherein the KSZ of the components (2) has
- a version number of the KSZ,
- a date of issue of the KSZ,
- an issuer of the KSZ,
- a type of the component
- a manufacturer identifier for identifying the manufacture of the component,
- a component identifier of the component,
- configuration parameters of the component.

## Revendications

1. Installation, comportant :
un gestionnaire de certificats de sécurité (6) ; et
au moins une chaîne fonctionnelle critique pour la sécurité (1) comportant plusieurs composants (2) concaténés l'un à l'autre par des liaisons de communication, KVB, lesquels ont respectivement un certificat de sécurité de composant associé, KSZ, mémorisé dans une zone de mémoire associée et protégée contre la manipulation d'une mémoire de données (7) et vérifiable par le gestionnaire de certificats de sécurité (6) pour déverrouiller le composant (2) au sein de la chaîne fonctionnelle critique pour la sécurité (1),
dans laquelle le KSZ comporte des certificats de sécurité d'interface, SSZ, pour des interfaces de composant de sortie du composant (2) avec un niveau de sécurité d'interface, SSL, respectivement indiqué dans ceux-ci, de l'interface fr composant de sortie respective ainsi que de SSZ pour les interfaces de composant d'entrée des composants (2) avec un niveau de sécurité d'interface SSL respectivement exigé dans ceux-ci de l'interface d'entrée composant respective,
le gestionnaire de certificats de sécurité (6) est configuré de façon à vérifier si un niveau de sécurité de composant, KSL, indiqueé dans les KSZ des composants chaînés (2) est suffisant pour un niveau de sécurité de composant, KSL, exigé du composant concerné selon des exigences de sécurité prédéfinies, et si dans les SSZ d'interfaces de composant d'entrée et de sortie reliées par une liaison de communication, KVB, de deux composants (2) adjacents au sein de la chaîne fonctionnelle critique pour la sécurité (1) des SSL respectivement indiqués sont compatibles l'un à l'autre, et
le gestionnaire de certificats de sécurité (6) est configuré pour déverrouiller automatiquement la chaîne fonctionnelle critique pour la sécurité (1) si la vérification de tous les KSL et SSL était valide.

2. Installation selon la revendication 1, dans laquelle les KSZ mémorisés sont lisibles et contrôlables par le gestionnaire de certificats de sécurité (6) en ce qui concerne leur validité à partir d'exigences de sécurité prédéfinies.

3. Installation selon la revendication 1 ou 2, dans laquelle la zone de mémoire destinée à mémoriser les KSZ du composant (2) est prévue dans une mémoire de données (7) protégée contre la manipulation, laquelle est intégrée dans les composants (2), ou est prévue dans une mémoire de données externe protégée contre la manipulation, laquelle est référencée par le biais d'une adresse-mémoire.

4. Installation selon la revendication 3, dans laquelle la mémoire de données (7) intégrée dans les composants (2) comporte un Trusted Platform Module (TPM) pour mémoriser le KSZ.

5. Installation selon l'une des revendications 1 à 4, dans laquelle le KSZ des composants (2) comporte :
- un numéro de version du KSZ,
- une date d'émission du KSZ,
- un émetteur du KSZ,
- une catégorie des composants,
- un identifiant fabricant pour l'identification du fabricant des composants,
- un identifiant composant du composant,
- des paramètres de configuration du composant.
